# EUROPÄISCHE PATENTSCHRIFT

(11) **EP 0 797 364 B1**
(45) Veröffentlichungstag und Bekanntmachung des Hinweises auf die Patenterteilung: **07.12.2005**
(21) Anmeldenummer: 96111507.8
(22) Anmeldetag: 17.07.1996
(51) Int. Cl.: H04Q 7/10

(54) **Verfahren zur Verbreitung von Mehrwertinformationen**
Method for the processing of added value information
Méthode pour le traitement des informations valorisées

(30) Priorität: 18.03.1996 DE 19610493
(43) Veröffentlichungstag der Anmeldung: 24.09.1997
(73) Patentinhaber: T-Mobile Deutschland GmbH, 53227 Bonn (DE)
(72) Erfinder: Daniel, Peter, 64342 Seeheim-Jugenheim (DE)
(74) Vertreter: Riebling, Peter

(56) Entgegenhaltungen:
- EP-A- 0 360 228
- EP-A- 0 570 937
- EP-A- 0 680 024
- WO-A-90/15512
- US-A- 4 369 443
- US-A- 4 818 987
- US-A- 5 241 305
- US-A- 5 450 071

## Beschreibung

Die vorliegende Erfindung befaßt sich mit einem Verfahren zur Verbreitung von Mehrwertinformationen auf Basis der standardisierten Codeformate für Funkrufdienste, nach dem Oberbegriff des Anspruchs 1.

Es sind verschiedene Funkrufdienste bekannt (RDS, Eurosignal, Cityruf, Scall), welche vor allem für die Aussendung von kundenspezifischen Nachrichten genutzt werden. Jeder Kunde hat einen eigenen Adresscode, unter welchem er direkt angerufen werden kann. Für den Empfang von allgemeinen, alphanumerischen Mehrwertinformationen im Broadcast-Betrieb sind diese bekannten Verfahren nicht oder nur sehr eingeschränkt geeignet.

Bekannte Funktionen, wie z.B. Gruppenruf oder Mail drop genügen nicht mehr den Ansprüchen der Anbieter von Mehrwertinformationen, der Netzbetreiber und den Endkunden.

Die US-A-5 241 305 offenbar ein sogenanntes Inforuf-System, welches neben dem Empfang des eigentlichen Funkrufs auch einen Empfang von Zusatzinformationen ermöglicht. Dies wird durch ein spezielles Verwaltungssystem erreicht, welches eine Unterscheidung trifft zwischen Funkruf- und Informationsruf-Daten. Dabei wird eine Frequenz für die Übertragung des Funkrufs und der Zusatzdienste verwendet, wobei der Empfänger unterscheidet, ob die empfangenen Daten einen Funkruf oder einen Inforuf enthalten. Die Gruppierungen (Multi-Level-Group-Messaging) beziehen sich auf elektronische Seriennummern, die im System definiert sind, und über welche die Empfänger angesprochen werden können. Die Programme werden also durch bestimmte Dateninhalte definierter Codeworte adressiert.

Die Freigabe bestimmter Informationen erfolgt über einen definierten Befehl des Systems, wobei der individuelle Empfänger über seine elektronische Seriennummer angesprochen wird.

In der EP 0 360 228 A2 ist ein Paging-Empfänger offenbart, bei dem der Empfang von Nachrichten in bekannter Weise durch den Empfang von sogenannten Frames und Adresscodes gesteuert wird. Der Empfang von Mehrwertdiensten im speziellen ist nicht beschrieben.

Der vorliegenden Erfindung liegt die Aufgabe zugrunde, ein Verfahren zur Verbreitung von Mehrwertinformationen vorzuschlagen, welches wesentlich erweiterte Möglichkeiten zur Übertragung und Auswertung von Mehrwertinformationen bereitstellt, wobei eine Kompatibilität zu den bisherigen bekannten Funkruf-Codeformaten erhalten bleiben soll.

Gelöst wird diese Aufgabe durch die kennzeichnenden Merkmale des Anspruchs 1.

Damit die Mehrwertinformationen generell von den Empfängern (Endgeräten) empfangen werden können, ist die Bereitstellung und Bekanntgabe eines einheitlichen, zweiten Adresscodes, zusätzlich zum individuellen ersten Adresscode, auf einer oder mehreren Frequenzen des Funkrufdienstes notwendig.

Die Mehrwertinformation kann somit auf jedem für den Funkrufdienst geeigneten Empfänger (Endgerät) ausgewertet werden. Die Funktionen für Mehrwertinformationen sind auf verschiedene Subadressen des einheitlichen Adresscodes aufgeteilt.
Die prinzipielle Struktur des einheitlichen Adresscodes kann folgendermaßen aussehen:
1. Subadresse für Steuerfunktionen:
   Die Steuerfunktion gewährleistet vor allem die individuelle Bereitstellung der Mehrwertinformationen für den Empfänger. Insbesondere stellt sie die Aktivierung/Deaktivierung von kostenpflichtigen Mehrwertinformationen sicher.
   Außerhalb des Mehrwertbereiches kann die Steuerfunktion zusätzlich zum Fernbedienen/Fernprogrammieren des Empfängers (Endgerätes) über die Ruffrequenzen genutzt werden. Bekannte Leistungen, wie z.B. "RIC over the air" können hiermit ebenfalls angeboten werden. Um z.B. das Endgerät des Empfängers fern zu bedienen oder fern zu programmieren ist normalerweise eine eindeutige Identifikation über den ersten Adresscode notwendig. Erfindungsgemäß kann der Programmierbefehl, der über die Subadresse für Steuerfunktionen ausgesendet wird, als eindeutige Identifikation sowohl den ersten individuellen Adresscode als auch eine andere eindeutige Identifikation des Empfängers (z.B. Seriennummer des Endgerätes) enthalten.
2. Subadresse zum Empfangen von kostenlosen Mehrwertinformationen:
   Über diese Subadresse empfängt das Endgerät die kostenlosen Mehrwertinformationen, die vom Betreiber des Funkrufnetzes im Broadcast-Verfahren ausgesendet werden. Als Themen bieten sich z.B. allgemeine Nachrichten im Bereich Sport, Politik, Wirtschaft, Wetter usw. an.
   Zur Unterscheidung der verschiedenen Themen wird dem eigentlichen Nachrichtenanhalt ein Themenheader pro Mehrwertinformation vorangestellt.
3. Subadresse zum Empfangen von kostenpflichten Mehrwertinformationen:
   Über diese Subadresse empfängt das Endgerät die kostenpflichtigen Mehrwertinformationen, die vom Betreiber des Funkrufnetzes im Broadcast-Verfahren ausgesendet werden. Als Themen bieten sich spezielle Nachrichten an, die vorwiegend von einem bestimmten Kundenkreis gelesen werden, wie z.B. Börsennachrichten usw. Die Themenunterscheidung erfolgt analog zu der Funktion für kostenlose Mehrwertinformationen.
4. Subadresse zum Empfang einer Themenübersicht (optional):
   Über diese Subadresse kann eine aktuelle Themenübersicht vom Endgerät eingelesen und angezeigt werden, die vom Betreiber des Funkrufnetzes im Broadcast-Verfahren zyklisch ausgesendet wird. Die Themenunterscheidung erfolgt analog der Funktion für kostenlose Mehrwertinformationen mit einem zusätzlichen Parameter zur Unterscheidung von kostenlosen und kostenpflichtigen Mehrwertthemen. Mit Hilfe dieser Themenübersicht kann sich der Kunde z.B. kostenlose Mehrwertthemen aus dem Themenangebot zur Darstellung auswählen bzw. kostenpflichtige Themen über den Netzbetreiber aktivieren lassen.

Zumindest die kostenpflichtigen Mehrwertinformationen müssen vom Betreiber sowohl freigegeben als auch wieder gesperrt werden können. Die Subadresse für Steuerfunktionen beinhaltet deshalb vorzugsweise eine Freigabe-Funktion, die ein befristetes oder unbefristetes Freigeben von Mehrwertinformationen zuläßt. Die Freigabe kann jedoch auf auch jedem anderen bekannten technischen Weg erfolgen wie durch direkte Eingabe eines entsprechenden Befehls in den Empfänger z.B. über Tastenfelder, induktiv, kapazitiv, optisch, akustisch etc. Die Freigabe-Funktion stützt sich auf ein Freigabe- und Sperrungsdatum, welches für gekennzeichnete Mehrwertinformationen festgelegt werden kann.

Als weitere Funktionalität ist die zyklische Übertragung einer Zeitinformation vorgesehen. Neben der Nutzung durch die Kunden dient die Übertragung und Auswertung der Zeitinformation auf den Endgeräten vornehmlich der Sicherstellung der Funktion zum Freigeben bzw. Sperren von Mehrwertinformationen.

Die Funktionen zum Empfangen von kostenlosen und kostenpflichtigen Mehrwertinformationen unterscheiden sich grundsätzlich nur durch die unterschiedliche Adressierung auf zwei getrennten Subadressen des einheitlichen Adresscodes. Die Struktur der Nachricht ist bei beiden Funktionen die gleiche und besteht z.B. aus einem Themenheader und einem Themeninhalt.

Durch den Themenheader wird die Zuordnung des nachfolgenden Themeninhalts zu einem bestimmten Thema sichergestellt. Dies ist insbesondere bei kostenpflichtigen Mehrwertinformationen notwendig, da hier der Kunde nur eine Teilleistung aus dem Angebot auswählt und nur diese ihm zur Verfügung gestellt werden soll.

Die Themenübersicht, die im Beispiel unter Subadresse 4. angewählt werden kann, ähnelt in ihrer Struktur den Funktionen für kostenlose und kostenpflichtige Mehrwertinformationen. Es ist ein Themenheader und ein Parameter zur Unterscheidung von kostenlosen/kostenpflichtigen Mehrwertthemen vorgesehen, denen ein Mehrwertthema zugeordnet werden kann. Die aktuelle Themenübersicht wird zyklisch, z.B. tagesweise vom Netzbetreiber ausgesendet und kann optional als Zusatzleistung auf dem Empfänger dargestellt werden. Dem Kunden steht somit jederzeit das aktuelle Angebot für kostenlose und kostenpflichtige Mehrwertinformation zur Verfügung.

## Patentansprüche

1. Verfahren zur Verbreitung von Mehrwertinformationen auf Basis standardisierter Codeformate für Funkrufdienste, bei dem auf einer oder mehreren Frequenzen über einen Adresscode, welcher die Identität eines bestimmten Empfängers festlegt, dem Empfänger eine Nachricht übermittelt werden kann, wobei mindestens ein zweiter, einheitlicher Adresscode zur Kennzeichnung mehrerer Empfänger des Funkrufdienstes vorgesehen ist, der auf einer oder mehreren vom Funkrufdienst benutzten Frequenzen ausgesendet wird, **dadurch gekennzeichnet, daß** der zweite, einheitliche Adresscode folgende Subadressen umfasst:
- eine erste Subadresse zur Übermittlung von Steuer- und/oder Kontrollinformationen zur Aktivierung oder Deaktivierung von kostenpflichtigen Mehrwertinformationen;
- eine zweite Subadresse zum Empfangen von kostenlosen Mehrwertinformationen;
- eine dritte Subadresse zum Empfangen von kostenpflichtigen Mehrwertinformationen; und
- eine vierte Subadresse zum Empfang einer aktuellen Themenübersicht der angebotenen Mehrwertinformationen, welche einen Themenheader und einen zusätzlichen Parameter zur Unterscheidung von kostenlosen und kostenpflichtigen Mehrwertthemen beinhaltet, wobei die Themenübersicht vom Betreiber des Funkrufnetzes im Broadcast-Verfahren zyklisch ausgesendet wird, wobei dem Empfänger jederzeit das aktuelle Angebot für kostenlose und kostenpflichtige Mehrwertinformation zur Verfügung steht und er kostenlose Mehrwertthemen aus dem Themenangebot zur Darstellung auswählen oder kostenpflichtige Themen über den Netzbetreiber aktivieren lassen kann.

2. Verfahren nach Anspruch 1, **dadurch gekennzeichnet, daß** die über den zweiten Adresscode adressierbaren Subadressen eine Nachrichtenübertragung im Textformat zulassen.

3. Verfahren nach einem der Ansprüche 1 oder 2, **dadurch gekennzeichnet, daß** über die erste Subadresse des einheitlichen Adresscodes Steuer- und/oder Kontrollinformationen zum Fernbedienen oder Fernprogrammieren des Empfängers übermittelt werden.

4. Verfahren nach einem der Ansprüche 1 bis 3, **dadurch gekennzeichnet, daß** je nach angesprochener Subadresse des einheitlichen Adresscodes ein kostenloser oder kostenpflichtiger Empfang der Mehrwertinformationen erfolgt.

5. Verfahren nach einem der Ansprüche 1 bis 4, **dadurch gekennzeichnet, daß** die Benutzung bestimmter Mehrwertinformationen vom Betreiber freigegeben oder gesperrt wird, wobei die mehrwertspezifische Freigabe über die erste Subadresse für Steuer- und/oder Kontrollinformationen des einheitlichen Adresscodes erfolgt.

6. Verfahren nach einem der Ansprüche 1 bis 5**, dadurch gekennzeichnet, daß** über die erste Subadresse für Steuer- und/oder Kontrollinformationen des einheitlichen Adresscodes eine zyklische Übertragung einer Zeitinformation erfolgt.

## Claims

1. Method for distributing value-added information on the basis of standardised code formats for paging services, in which, on one or more frequencies via an address code which fixes the identity of a particular receiver, a message can be transmitted to the receiver, wherein at least one second, standard address code is provided for labelling several receivers of the paging service and is emitted on one or more frequencies used by the paging service, **characterised in that** the second, standard address code includes the following subaddresses:
- a first subaddress for transmitting control and/or check information for activating or deactivating chargeable value-added information;
- a second subaddress for receiving free value-added information;
- a third subaddress for receiving chargeable value-added information; and
- a fourth subaddress for receiving a current subject overview of the value-added information offered, which contains a subject header and an additional parameter for distinguishing between free and chargeable value-added subjects, wherein the subject overview is emitted cyclically by broadcasting by the operator of the paging network, wherein the current offer of free and chargeable value-added information is available to the receiver at any time and he can select free value-added subjects from the subject offer for display or have chargeable subjects activated via the network operator.

2. Method according to claim 1, **characterised in that** the subaddresses which are addressable via the second address code allow message transmission in text format.

3. Method according to either of claims 1 or 2, **characterised in that**, via the first subaddress of the standard address code, control and/or check information is transmitted for remote operation or remote programming of the receiver.

4. Method according to any of claims 1 to 3, **characterised in that**, depending on the subaddress of the standard code which is addressed, free or chargeable reception of value-added information is effected.

5. Method according to any of claims 1 to 4, **characterised in that** the use of particular value-added information is cleared or blocked by the operator, wherein value-added-specific clearance is effected via the first subaddress for control and/or check information of the standard address code.

6. Method according to any of claims 1 to 5, **characterised in that** cyclic transmission of time information is effected via the first subaddress for control and/or check information of the standard address code.

## Revendications

1. Procédé pour diffuser des informations à valeur ajoutée sur la base de formats de code standardisés, pour des services de radiotéléphonie, selon lequel un message peut être transmis au récepteur sur une ou plusieurs fréquences par l'intermédiaire d'un code d'adresse qui fixe l'identité d'un récepteur défini, étant précisé qu'il est prévu au moins un deuxième code d'adresse unique qui est destiné à caractériser plusieurs récepteurs du service de radiotéléphonie et qui est émis sur une ou plusieurs fréquences utilisées par le service de radiotéléphonie,
**caractérisé en ce que** le deuxième code d'adresse unique comprend les sous-adresses suivantes :
- une première sous-adresse pour la transmission d'informations de commande et/ou de contrôle en vue d'activer ou de désactiver des informations à valeur ajoutée payantes ;
- une deuxième sous-adresse pour la réception d'informations à valeur ajoutée gratuites ;
- une troisième sous-adresse pour la réception d'informations à valeur ajoutée payantes ; et
- une quatrième sous-adresse pour la réception d'un aperçu thématique actuel des informations à valeur ajoutée proposées qui contient un en-tête thématique et un paramètre supplémentaire pour distinguer les thèmes à valeur ajoutée gratuits et payants, étant précisé que l'aperçu thématique est envoyé de manière cyclique par l'exploitant du réseau radiotéléphonique, par diffusion, et que le récepteur dispose à tout moment de l'offre actuelle pour les informations à valeur ajoutée gratuites et payantes et peut sélectionner parmi l'offre thématique des thèmes à valeur ajoutée gratuits en vue de les afficher, ou faire activer des thèmes payants par l'intermédiaire de l'exploitant du réseau.

2. Procédé selon la revendication 1, **caractérisé en ce que** les sous-adresses adressables par l'intermédiaire du deuxième code d'adresse autorisent une transmission de messages en format texte.

3. Procédé selon la revendication 1 ou 2, **caractérisé en ce que** par l'intermédiaire de la première sous-adresse du code d'adresse unique, des informations de commande et/ou de contrôle sont transmises en vue de la commande à distance ou de la programmation à distance du récepteur.

4. Procédé selon l'une des revendications 1 à 3, **caractérisé en ce que** suivant la sous-adresse du code d'adresse unique auquel on s'adresse, la réception des informations à valeur ajoutée qui a lieu est gratuite ou payante.

5. Procédé selon l'une des revendications 1 à 4, **caractérisé en ce que** l'utilisation d'informations à valeur ajoutée définies est validée ou bloquée par l'exploitant, la validation spécifique pour la valeur ajoutée se faisant par l'intermédiaire de la première sous-adresse pour des informations de commande et/ou de contrôle du code d'adresse unique.

6. Procédé selon l'une des revendications 1 à 5, **caractérisé en ce** par l'intermédiaire de la première sous-adresse pour des informations de commande et/ou de contrôle du code d'adresse unique a lieu une transmission cyclique d'une information de temps.
